# EUROPÄISCHE PATENTSCHRIFT

(11) **EP 0 876 935 B1**
(45) Veröffentlichungstag und Bekanntmachung des Hinweises auf die Patenterteilung: **08.12.2004**
(21) Anmeldenummer: 98107452.9
(22) Anmeldetag: 23.04.1998
(51) Int. Cl.: B60K 31/00

(54) **Bedienhebel und Bedienmanagement für einen abstandgeregelten Fahrgeschwindigkeitsregler**
Selector lever and operation of a cruise controller with inter-vehicle distance regulator
Levier de commande et modalités d'opération pour régulateur de vitesse avec régulation à distance

(30) Priorität: 07.05.1997 DE 19719476
(43) Veröffentlichungstag der Anmeldung: 11.11.1998
(73) Patentinhaber: MAN Nutzfahrzeuge Aktiengesellschaft, 80976 München (DE)
(72) Erfinder: Schiehlen, Joachim, Dr.-Ing., 82110 Germering (DE); Schwertberger, Walter, Dipl.-Ing. (FH), 82194 Gröbenzell (DE); Hipp, Eberhard, Dipl.-Ing., 80798 München (DE); Jung, Christoph, Dipl.-Ing. (TH), 85757 Karlsfeld (DE)

(56) Entgegenhaltungen:
- EP-A- 0 441 961
- WO-A-98/29279
- DE-A- 4 338 098
- US-A- 5 091 726
- US-A- 5 197 562
- US-A- 5 477 457
- PATENT ABSTRACTS OF JAPAN vol. 017, no. 558 (M-1493), 7. Oktober 1993 & JP 05 156977 A (TOYOTA MOTOR CORP), 22. Juni 1993
- PATENT ABSTRACTS OF JAPAN vol. 017, no. 517 (M-1481), 17. September 1993 & JP 05 133250 A (TOYOTA MOTOR CORP), 28. Mai 1993
- PATENT ABSTRACTS OF JAPAN vol. 018, no. 543 (M-1687), 17. Oktober 1994 & JP 06 191318 A (TOYOTA MOTOR CORP), 12. Juli 1994
- Winner H. et al: 'Adaptive Cruise Control Aspects and Development Trends', Society of Automotive Engineers Inc., (US), SAE-Paper 961010, 1996, Seiten 1412-1421 XP002124577

## Beschreibung

Die Erfindung betrifft eine Bedienungseinrichtung eines Fahrgeschwindigkeitsreglers eines Kraftfahrzeugs.

Aus, Winner et. al.: "Adaptive Cruise Control System Aspects and Development Trends", Society of Automotive Engineers, SAE-Paper 961010 1996, Seiten 1412-1421 (XP-002124577) ist eine derartige Einrichtung bekannt, bei welcher zusätzlich zum normal vorhandenen Geschwindigkeitsregler ein abstandsgeregelter Fahrgeschwindigkeitsregler vorgesehen ist. Dabei wird automatisch vom abstandsgeregelten Geschwindigkeitsregler auf den normal vorhandenen Geschwindigkeitsregler umgeschaltet, wenn ein vorausfahrendes Fahrzeug schneller als die eingestellte Sollgeschwindigkeit des mit dem abstandsgeregelten Fahrmodus fahrenden Folgefahrzeugs fährt. Wenn das Folgefahrzeug wieder in den Bereich des Sollabstands zum vorausfahrenden Fahrzeug kommt, wird automatisch wieder auf den abstandsgeregelten Fahrmodus umgeschaltet. Zusätzlich ist eine manuelle An- und Abschaltung des abstandsgeregelten Fahrgeschwindigkeitsreglers vorgesehen, wobei hierzu ein separater Schalter, der noch andere Funktionen haben kann, vorgesehen ist.

Aus der DE 43 38 098 C2 ist eine Bedienungseinrichtung bekannt, bei der mit einem Bedienhebel am Lenkstock acht Positionen schaltbar sind, wobei mit Positionen F1 bis F4 in einer ersten Schaltebene gespeicherte Geschwindigkeitsprogramme abrufbar sind und in einer zweiten Schaltebene ZF1 bis ZF4 die Geschwindigkeitsprogramme speicherbar und änderbar sind. Zum Aktivieren von einem gewählten Geschwindigkeitsprogramm muss der genannte Hebelschalter, z.B. in eine Position F2 gebracht und zusätzlich gezogen (+y-Richtung) werden. Mit der genannten Einrichtung ist ein einprägsames Bedienmanagement auch für einen abstandsgeregelten Fahrgeschwindigkeitsregler nicht zu verwirklichen.

Aufgabe der Erfindung ist es, eine Bedieneinrichtung eines Fahrgeschwindigkeitsreglers eines Kraftfahrzeugs zu schaffen, bei welcher mit möglichst einfachen Mitteln ein möglichst logisches und vollständiges Bedienmanagement auch für einen abstandsgeregelten Fahrgeschwindigkeitsregler erreicht wird.

Diese Aufgabe wird erfindungsgemäß durch die Merkmale des Anspruches 1 gelöst. Vorteilhafte Weiterbildungen sind in den Unteransprüchen gekennzeichnet.

Der Fahrgeschwindigkeitsregler (FGR), als selbständige Einrichtung (ohne abstandsgeregelten Fahrgeschwindigkeitsregler), wird mit einem am Lenkstock angeordneten Bedienhebel, wie im Text folgend, aktiviert, eingestellt und deaktiviert.

Mit dem Bedienen einer Taste im Bedienhebel welche im Folgenden mit ACC-Taste bezeichnet ist, auf WA (Wiederaufnahme) wird der Fahrgeschwindigkeitsregler aktiviert und die zuletzt eingestellte Fahrgeschwindigkeit eingeregelt. Will der Fahrzeugführer eine höhere geregelte Geschwindigkeit fahren, so muß er den Bedienhebel in Richtung einer Stellung SET+ bedienen, will er eine niedrigere geregelte Geschwindigkeit fahren, muß er den Bedienhebel in Richtung einer Stellung SET- bedienen. Durch kurzes Antippen von SET+ oder SET- wird die Geschwindigkeit schrittweise um einen festen Wert, z. B. um 2 km/h, verändert. Wird der Hebel längere Zeit auf SET+ oder SET- gehalten, so wird die Geschwindigkeit kontinuierlich erhöht (+) oder verringert (-). Will der Fahrer den Fahrgeschwindigkeitsregler (FGR) deaktivieren, weil z. B. ein Stau ist oder nur langsam gefahren werden kann, so kann er dies mit der Taste im Bedienhebel durch Bedienen auf AUS erreichen.

Wenn der Fahrzeugführer wieder eine andere, als die zuletzt gespeicherte, z. B. die aktuelle Fahrgeschwindigkeit geregelt fahren will, so muß er nur kurzzeitig den Bedienhebel auf SET+ oder SET- bedienen.

Wird dem Fahrgeschwindigkeitsregler (FGR) nun eine Abstandsregelung übergeordnet hinzugefügt, so hat man den abstandsgeregelten Fahrgeschwindigkeitsregler (ACC = Adaptive Cruise Control). Mit übergeordnet ist hier gemeint, daß zuerst die Abstandsregelung wirkt und erst dann, wenn z. B. kein (langsameres) vorausfahrendes Fahrzeug durch die Abstandsregelung erkannt ist, der Fahrgeschwindigkeitsregler (FGR) wirkt.

Für den abstandsgeregelten Fahrgeschwindigkeitsregler (ACC) wird ein vom Fahrgeschwindigkeitsregler (FGR) abgeleiteter und modifizierter Bedienhebel, der noch andere Bedienfunktionen hat, verwendet.

Bedienfunktionen des modifizierten Bedienhebels für den ACC:
a) Nachdem der Motor neu gestartet ist und geregelt gefahren werden kann, kann durch Bedienen des Bedienhebels auf SET+ oder SET- der ACC aktiviert werden. Das System erkennt, daß vorher der Motor abgestellt war, dies der erste Befehl für die Aktivierung des ACC ist und gibt automatisch einen großen Abstand (z. B. > 50 m) für die Abstandsregelung vor. Der Fahrer wird mit dieser Maßnahme nicht dadurch überrascht, daß der Abstandsregler einen zu geringen Abstand einregelt, der den Fahrbedingungen nicht entsprechen könnte. Automatisch wird zusätzlich durch das genannte Bedienen die aktuelle Geschwindigkeit als Sollgeschwindigkeit gesetzt. Die Änderung der Sollgeschwindigkeit erfolgt, wie wenn man nur den FGR hätte, durch Bedienen des Bedienhebeis auf SET+ (Erhöhung) oder SET- (Verringerung).
b) Der Abstand für die Abstandsregelung wird im weiteren Verlauf durch gleichzeitiges Bedienen des Bedienhebels auf SET+ oder SET- und der ACC-Taste auf WA, bei kurzem Antippen von SET in Schritten (z. B. nah, mittel, weit), oder bei längerem Halten von SET, kontinuierlich vergrößert (SET+) oder verringert (SET-). Die gesetzte Geschwindigkeit bleibt dabei unverändert, siehe auch a).
c) Wenn die Abstandsregelung deaktiviert werden soll, so erfolgt dies mit der Bedienung der ACC-Taste auf AUS. Damit wird aber auch gleichzeitig der FGR deaktiviert.
d) Soll während der Fahrt (ohne daß in der Zwischenzeit der Motor abgestellt wurde) der ACC wieder aktiviert werden, sa genügt die Bedienung der ACC-Taste auf WA. Es werden dann die zuletzt gespeicherten Werte von Geschwindigkeit und Abstand angestrebt bzw. eingeregelt.
e) Für Überholvorgänge bei aktiviertem ACC sind die Funktionen Überhothitfe (Ü) und Auffahrhilfe (AH) geschaffen, damit das Überholen in annähernd gewohnter Weise durchführbar ist. Für die Überholhilfe (Ü) ist eine Überholhilfe-Taste (Ü-Taste) im Bedienhebel, für die Auffahrhilfe (AH) ist das Gaspedal vorgesehen.
   e1) Situation:
      Das Fahrzeug (A) nähert sich mit aktiviertem ACC, wobei momentan der FGR wirkt, einem langsameren Fahrzeug (B), das dann überholt werden soll.
      Der Fahrer des Fahrzeugs (A) hat die Möglichkeiten:
      I. Überholen mit der Überholhilfe (Ü):
         Er drückt die Ü-Taste und aktiviert damit die Überholhilfe. Dadurch wird die Abstandsregelung deaktiviert oder automatisch auf einen geringen Mindestabstand gesetzt und das Fahrzeug (A) fährt geschwindigkeitsgeregelt an das vorausfahrende Fahrzeug (B) heran. Wenn der Verkehr es erlaubt, kann der Fahrer geschwindigkeitsgeregelt überholen. Ist der Überholvorgang beendet, oder Fahrzeug (B) nicht mehr vor Fahrzeug (A), beides erkennt das System, wird automatisch die Überholhilfe deaktiviert und der ACC aktiviert und es werden die Werte für Geschwindigkeit und Abstand, die vor dem Überholvorgang gesetzt waren, wieder als Sollwerte vorgegeben.
      II. Überholen mit der Auffahrhilfe (AH):
         IIa) Er bedient das Gaspedal so, daß es mindestens aus seiner Ruhelage ausgelenkt, aber noch nicht die Stellung übersteuert, die die momentan wirkende Regelung am Dieselmotor eingestellt hat.
            Damit erreicht der Fahrer, daß die Auffahrhilfe aktiviert ist, die Geschwindigkeitsregelung des FGR weiterhin wirkt und der eingestellte Abstand des ACC unterfahrbar ist. Wenn aus Sicht des Verkehrs das Überholen des Fahrzeuges (B) in dieser Weise durchführbar ist, so erkennt das System anschließend, daß der Überholvorgang beendet und Fahrzeug (B) nicht mehr vor Fahrzeug (A) ist und aktiviert automatisch wieder den ACC, wenn der Fahrer den Fuß vom Gaspedal nimmt.
            Wenn der Fahrer des Fahrzeuges (A) doch nicht überholen kann und Fahrzeug (B) im Bewertungsbereich der Abstandsregelung ist, so wird der Fahrer des Fahrzeuges (A) den Fuß vom Gaspedal nehmen. Damit aktiviert er ein anderes Programm der Auffahrhilfe, mit dem eine moderate Verzögerung des Fahrzeuges eingeleitet und durchgeführt wird, bis der gesetzte Abstand des ACC wieder eingeregelt ist, oder bis das Programm der Auffahrhilfe für die moderate Verzögerung des Fahrzeuges durch Bedienen des Gaspedals abgebrochen wird. Unter moderater Verzögerung meint man hier eine Verzögerung, wie sie entsteht, wenn das Fahrzeug auf horizontaler Fahrbahn durch die Schleppleistung des Fahrzeuges verzögert wird. Gerät das Fahrzeug (A) trotz der moderaten Verzögerung in den gefährlich nahen Abstandsbereich zum Fahrzeug (B), so wird eine automatische Zwangsbremsung eingeleitet, die den ACC und die Auffahrhilfe deaktiviert. Gleiches gilt auch, wenn das Bremspedal bedient wird.
         IIb) Der Fahrer des Fahrzeuges (A) bedient das Gaspedal so, daß die Stellung, die die momentan wirkende Regelung, hier der FGR (wenn das System Fahrzeug (B) noch nicht erkannt hat) am Dieselmotor eingestellt hat, übersteuert wird. Damit erreicht der Fahrer, daß das Fahrzeug beschleunigt, die Auffahrhilfe aktiviert ist und der eingestellte Abstand des ACC unterfahrbar ist. Nun kann der Fahrer das Fahrzeug (A), wie dies der Verkehr erfordert,
            z. B. durch moderates Verzögern (siehe IIa), wenn Fahrzeug (B) im Erfassungsbereich des Radarsensors ist, durch Wegnehmen des Fußes vom Gaspedal,
            oder durch weiteres Beschleunigen des Fahrzeuges (A),
            oder durch Halten der aktuellen Geschwindigkeit durch entsprechendes Bedienen des Gaspedals,
         überholen.
         Ist der Überholvorgang durchgeführt oder Fahrzeug (B) nicht mehr vor Fahrzeug (A), beides erkennt das System, so kann der ACC durch Wegnehmen des Fußes vom Gaspedal wieder aktiviert werden. Wenn der Fahrer des Fahrzeuges (A) doch nicht überholen kann, so gilt das unter e1, IIa, Absatz 3 beschriebene.
   e2) Situation:
      Fahrzeug (A) fährt abstandsgeregelt hinter Fahrzeug (B), das überholt werden soll.
      Der Fahrer des Fahrzeugs (A) hat die Möglichkeiten:
      1. Überholen mit der Überholhilfe (Ü)
         Er drückt die Ü-Taste, wodurch das Fahrzeug (A) beschleunigt (wenn die gesetzte Geschwindigkeit höher als die aktuelle Geschwindigkeit ist) und er kann geschwindigkeitsgeregelt überholen. Wenn das Fahrzeug (A) das Fahrzeug (B) überholt hat, so erkennt das System, daß Fahrzeug (B) überholt wurde, deaktiviert automatisch die Überholhilfefunktion (Ü) und aktiviert automatisch wieder den ACC.
      II. Überholen mit der Auffahrhilfe (AH)
         Er bedient das Gaspedal so, daß er mehr Leistung anfordert, als der ACC, in diesem Fall die Abstandsregelung, es vom Dieselmotor fordert und übersteuert damit die Einstellung durch den ACC. Der Fahrer erreicht mit dieser Maßnahme, daß das Fahrzeug nach seinem Wunsch beschleunigt, die Auffahrhilfe aktiviert und der eingestellte Abstand des ACC unterfahrbar ist. Der Überholvorgang ist in diesem Fall nicht geschwindigkeitsgeregelt, sondern nach dem individuellen Wunsch des Fahrers durchführbar. Ist der Überholvorgang beendet, so erkennt das System, daß Fahrzeug (B) überholt wurde, dann wird, wenn der Fahrer den Fuß vom Gaspedal nimmt, die Auffahrhilfe deaktiviert und der ACC automatisch
         Wenn der Fahrer des Fahrzeugs (A) sieht, daß er Fahrzeug (B) doch nicht überholen kann, so kann er dadurch, daß er den Fuß vom Gaspedal nimmt, eine moderate Verzögerung des Fahrzeugs erreichen, deren Steuerung das System übernimmt. Die Auffahrhilfe bleibt dabei immer noch aktiv. Dadurch wird ermöglicht, daß der Fahrer bei der sich nächst bietenden Gelegenheit Fahrzeug (B) überholen kann. Verschwindet Fahrzeug (B) aus dem Bewertungsbereich des Abstandssensors, so wird die Auflahrhilfe automatisch deaktiviert und der ACC automatisch aktiviert.
         Für Überholhilfe und Auffahrhilfe gilt gemeinsam:
         Wenn das Fahrzeug (B) auf längere Sicht nicht mehr überholt werden kann, kann durch Bedienen der ACC-Taste auf WA der ACC wieder aktiviert werden und die zuletzt gesetzten Werte für Geschwindigkeit und Abstand sind die Sollwertvorgaben.
f) Muß die Fußbremse betätigt werden, so wird der ACC und, wenn sie aktiviert war, die Überholhilfe oder die Auffahrhilfe deaktiviert.

Für den ACC sind folgende Anzeigen vorzusehen:
gesetzte Geschwindigkeit,
ACC aktiv,
gesetzter Abstand,
Überholhilfe/Auffahrhilfe aktiv,
es ist ein vorausfahrendes Fahrzeug erkannt und dessen Geschwindigkeit.

In der Zeichnung ist ein Ausführungsbeispiel der Erfindung schematisch dargestellt. Es zeigen:

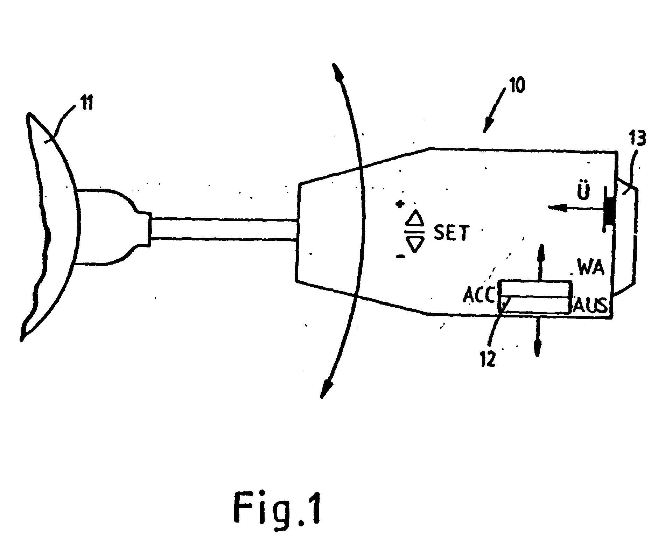

- Fig.1: einen Bedienhebel,

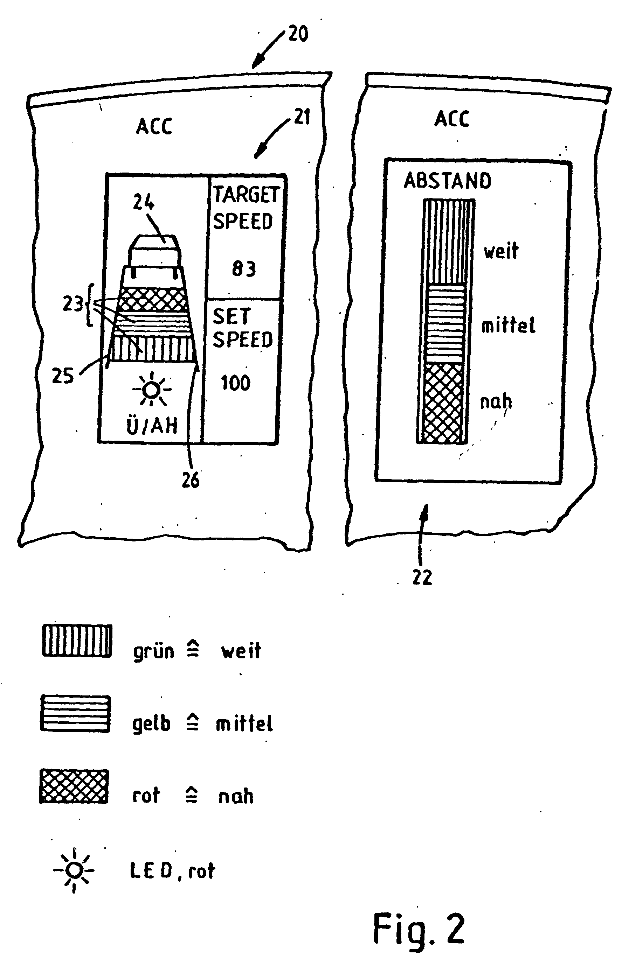

- Fig. 2: Anzeigen in der Armaturentafel, und
- Fig. 3: Anzeigen in der Armaturentafel.

Da das Bedienmanagement bereits ausführlich beschrieben wurde, sollte hier eine Kurzbeschreibung genügen.

### Kurzbeschreibung:

Fig. 1
   Nachdem der Motor neu gestartet ist und geregelt gefahren werden kann:
   Aktivierung des ACC durch Bedienen eines Bedienhebels 10 auf SET+ oder SET-Für den ACC wird der größte einprogrammierbare Abstand automatisch vorgegeben und als Geschwindigkeitsvorgabe wird automatisch die aktuelle Geschwindigkeit gesetzt.
   Während der Fahrt:
   Deaktivieren des ACC:
   Bedienung einer ACC-Taste 12 auf AUS. .
   Aktivieren des ACC:
   Bedienung der ACC-Taste 12 auf WA. Die vorher eingestellten Werte für Geschwindigkeit und Abstand sind die Sollwertvorgaben.
   Oder: Bedienen von SET+ oder SET-, dabei wird die aktuelle Geschwindigkeit gesetzt und der vorher eingestellte Abstand zum Einregeln wieder vorgegeben.
   Aktivieren der Überholhilfe Ü:
   Bedienung einer Ü-Taste 13 (Druck- oder Wipptaste).
   Deaktivieren der Überholhilfe Ü:
   Bedienung der ACC-Taste 12 auf WA, oder, wenn vorausfahrendes Fahrzeug aus dem Erfassungsbereich des Radars verschwindet, oder wenn gefährlich nah auf das vorausfahrende Fahrzeug aufgefahren und dadurch eine Zwangsbremsung verursacht wird, oder durch Betätigen der Fußbremse.
   Aktivieren der Auffahrhilfe AH:
   Bedienen des Gaspedals.
   Deaktivieren der Auffahrhilfe AH:
   Wie Deaktivieren der Überholhilfe Ü. Zusätzlich muß der Fuß vom Gaspedal genommen werden.
   Verändern des gesetzten Abstandes des ACC:
   Gleichzeitiges Bedienen der ACC-Taste 12 auf WA und des Bedienhebels 10 auf SET+ oder SET-, bei kurzem Antippen um jeweils eine Stufe (z. B. weit, mittel, nah) oder bei längerem Halten kontinuierlich.
   Verändern der gesetzten Geschwindigkeit des ACC:
   Bedienen des Bedienhebels 10 auf SET+ oder SET-, bei kurzem Antippen um jeweils eine Stufe (z. B. 2 km/h) oder bei längerem Halten kontinuierlich.
Fig. 2
   In einer Armaturentafel 20 ist ein Display 21 mit Angabe der Geschwindigkeit (83 km/h) eines vorausfahrenden Fahrzeugs mit
   TARGET SPEED 83
   und der gesetzten Geschwindigkeit (100 km/h) mit
   SET SPEED 100
   bezeichnet.
   Ist ein vorausfahrendes Fahrzeug 24 durch den Abstandssensor erkannt, so erscheinen symbolisch zwei konvergierende Balken 25 und 26 und das vorausfahrende Fahrzeug 24. Die Fläche zwischen den Balken 25 und 26, die die Straße darstellt, kann vorzugsweise für eine Art Säulendiagramm für die Darstellung des eingestellten Abstandes 23 genutzt werden, mit den Abständen 23 "weit", "mittel" und "nah".
   Die Darstellung des gesetzten Abstands kann auch mit einem Säulendiagramm 22 erfolgen. Für die Anzeige der aktivierten Überholhilfe Ü oder der Auffahrhilfe AH ist vorzugsweise im Display 21 eine rote LED vorzusehen.
Fig. 3

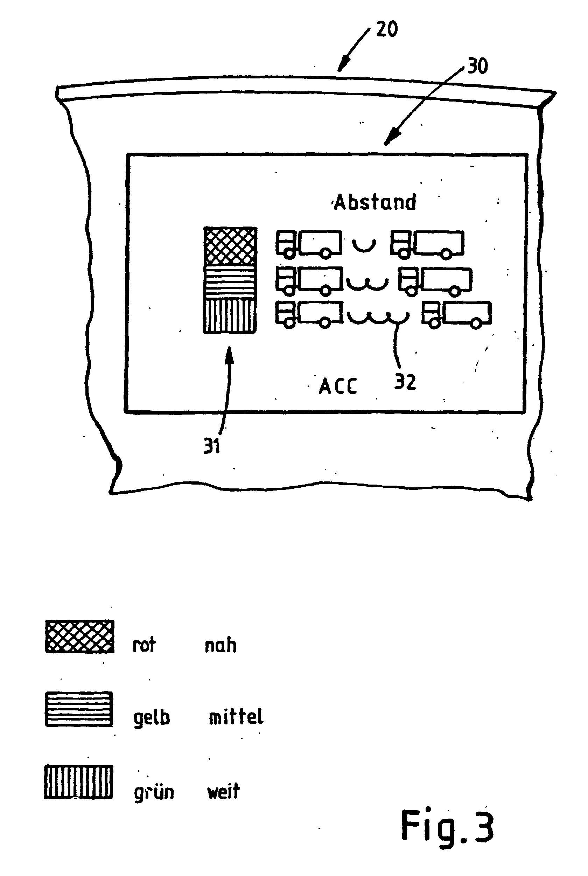

   Die Fig. 3 zeigt eine weitere Möglichkeit der Abstandsanzeige. In der Armaturentafel 20 ist ein Display 30 angeordnet. Der Abstand zum vorausfahrenden Fahrzeug ist hier symbolisch mittels Ketten 32 dargestellt. Die Symbolik 32 kann, abhängig vom Schaltzustand des ACC, aufleuchtbar ausgestaltet sein. Zusätzlich kann noch ein aufleuchtbares Säulendiagramm 31 vorgesehen sein.

## Patentansprüche

1. Bedienungseinrichtung eines Fahrgeschwindigkeitsreglers (FGR) eines Kraftfahrzeuges, mit einem am Lenkstock (11) angeordneten Bedienhebel (10), der in Stellungen zum Setzen und Vergrößern einer Sollwertvorgabe (SET+) und zum Setzen und Verringern einer Sollwertvorgabe (SET-) zu betätigen ist, wobei der Fahrgeschwindigkeitsregler (FGR) und der Bedienhebel (10) Bestandteil eines abstandsgeregelten Fahrgeschwindigkeitsreglers (ACC) sind und der Bedienhebel (10) eine Taste (12) aufweist, die in eine Stellung zur Aktivierung und zur Wiederaufnahme eines abstandsgeregelten Betriebs (WA) und eine Stellung zum Ausschalten des abstandsgeregelten Fahrgeschwindigkeitsreglers (AUS) zu betätigen ist, wobei bei aktiviertem abstandsgeregeltem Fahrgeschwindigkeitsregler und nicht betätigter Taste (12) eine Betätigung des Bedienhebels (10) eine Sollwertvorgabe für die Fahrgeschwindigkeit gewirkt, wohingegen gleichzeitiges Bedienen des Bedienhebels in die Stellung zum Setzen und Erhöhen beziehungsweise in die Stellung zum Setzen und Verringern der Sollwertvorgabe und der Taste (12) in die Stellung zur Aktivierung und Wiederaufnahme eines abstandsgeregelten Betriebs (WA) eine Vergrößerung beziehungsweise eine Verringerung des Sollabstands bewirkt, wobei ein kurzes Antippen des Bedienhebels (10) in die Stellung zum Setzen und Vergrößern der Sollwertvorgabe (SET+) oder in die Stellung zum Setzen und Verringern der Sollwertvorgabe (SET-) eine Veränderung um jeweils eine Stufe und längeres Halten des Bedienhebels (10) in diesen Stellungen eine kontinuierliche Veränderung des gesetzten Abstands bewirkt.

2. Bedienungseinrichtung nach Anspruch 1,
**dadurch gekennzeichnet, dass** der abstandsgeregelte Fahrgeschwindigkeitsregler (ACC) nach Deaktivierung während der Fahrt durch Bedienen der Taste (12) auf Wiederaufnahme (WA) aktiviert wird und die zuletzt eingestellten Werte für Geschwindigkeit und Abstand zum vorausfahrenden Fahrzeug als Sollwertvorgabe wieder eingeregelt werden.

3. Bedienungseinrichtung nach Anspruch 1,
**dadurch gekennzeichnet, dass** der Abstand, eingeteilt in "weit", "mittel" und "nah", durch gleichzeitiges Bedienen des Bedienhebels (10) auf SET+ oder SET- und der Taste (12) auf Wiederaufnahme (WA) in die genannten Abstände einstellbar ist.

4. Bedienungseinrichtung nach einem der vorhergehenden Ansprüche,
**dadurch gekennzeichnet, dass** nachdem der Motor abgestellt war, der abstandsgeregelte Fahrgeschwindigkeitsregler (ACC) durch Bedienen des Bedienhebels (10) auf SET+ oder SET- aktivierbar ist, wobei gleichzeitig der größte der einstellbaren Abstände und die aktuelle Geschwindigkeit gesetzt werden.

5. Bedienungseinrichtung nach einem der vorhergehenden Ansprüche,
**dadurch gekennzeichnet, dass** der Geschwindigkeits-Sollwert für den abstandsgeregelten Fahrgeschwindigkeitsregler (ACC) durch Bedienen des Bedienhebels (10) kurzzeitig auf SET+ oder SET- schrittförmig und bei längerem Halten von SET+ oder SET- kontinuierlich erhöht oder verringert wird.

6. Bedienungseinrichtung nach einem der vorhergehenden Ansprüche,
**dadurch gekennzeichnet, dass** eine Überholhilfe (Ü) vorgesehen ist, mittels derer der eingestellte Abstand des abstandsgeregelten Fahrgeschwindigkeitsreglers (ACC) unterfahrbar ist, wobei die Abstandsregelung deaktiviert oder auf einen Mindestabstand gesetzt ist.

7. Bedienungseinrichtung nach Anspruch 6,
**dadurch gekennzeichnet, dass** eine Überholhilfetaste (13) im Bedienhebel (10) vorgesehen ist, mit der die Überholhilfe (Ü) aktivierbar ist.

8. Bedienungseinrichtung nach Anspruch 6,
**dadurch gekennzeichnet, dass** die Überholhilfe (Ü) automatisch durch Betätigen des Blinkerhebels aktiviert wird.

9. Bedienungseinrichtung nach einem der vorhergehenden Ansprüche,
**dadurch gekennzeichnet, dass** durch die Bedienung der Taste (12) auf Wiederaufnahme (WA) oder Zurückstellen des Blinkerhebels in die Neutralstellung die Überholhilfe (Ü) deaktiviert wird.

10. Bedienungseinrichtung nach einem der vorhergehenden Ansprüche,
**dadurch gekennzeichnet, dass** eine Auffahrhilfe (AH) vorgesehen ist, mittels derer der eingestellte Abstand des abstandsgeregelten Fahrgeschwindigkeitsreglers (ACC) unterfahrbar ist, wobei die Abstandsregelung deaktiviert oder auf einen Mindestabstand gesetzt ist.

11. Bedienungseinrichtung nach Anspruch 10,
**dadurch gekennzeichnet, dass** durch Betätigen des Gaspedals die Auffahrhilfe (AH) aktiviert ist.

12. Bedienungseinrichtung nach den Ansprüchen 10 und 11,
**dadurch gekennzeichnet, dass** die Auffahrhilfe (AH), ohne dass mit dem Gaspedal die momentane Einstellung des Motors durch den abstandsgeregelten Fahrgeschwindigkeitsregler (ACC) übersteuert wird und dabei der aktuelle Fahrzustand des Fahrzeuges unverändert bleibt, aktiviert ist.

13. Bedienungseinrichtung nach den Ansprüchen 10 und 11,
**dadurch gekennzeichnet, dass** die Auffahrhilfe (AH) durch Übersteuern der momentanen Einstellung des Motors, die durch den abstandsgeregelten Fahrgeschwindigkeitsregler (ACC) vorgegeben ist, mit dem Gaspedal aktiviert wird.

14. Bedienungseinrichtung nach den Ansprüchen 10 bis 13,
**dadurch gekennzeichnet, dass** die Auffahrhilfe (AH) nach Wegnahme des Fußes vom Gaspedal weiterhin noch aktiv bleibt und über das Regelsystem eine moderate Verzögerung des Fahrzeuges einleitet, so lange, bis der eingestellte Abstand des abstandsgeregelten Fahrgeschwindigkeitsreglers (ACC) wieder erreicht ist.

15. Bedienungseinrichtung nach einem der Ansprüche 6 bis 14,
**dadurch gekennzeichnet, dass** bei aktivierter Überholhilfe (Ü) oder Auffahrhilfe (AH), bei einem gefährlich nahen Abstand zum vorausfahrenden Fahrzeug, eine automatische Zwangsbremsung aufgrund eines Befehlssignals der Abstandsregelung eingeleitet wird und dadurch die Überholhilfe (Ü) oder die Auffahrhilfe (AH) deaktiviert wird.

16. Bedienungseinrichtung nach einem der Ansprüche 6 bis 15,
**dadurch gekennzeichnet, dass** die Überholhilfe (Ü) oder die Auffahrhilfe (AH) deaktiviert wird, wenn das durch das Abstandsmesssystem erkannte Fahrzeug aus dem Bewertungsbereich des Abstandssensors verschwindet und/oder ein anderes Fahrzeug oder kein Fahrzeug mehr erfasst wird.

17. Bedienungseinrichtung nach einem der Ansprüche 10 bis 16,
**dadurch gekennzeichnet, dass** die Auffahrhilfe (AH) durch das Bedienen der Taste (12) auf Wiederaufnahme (WA) deaktiviert wird.

18. Bedienungseinrichtung nach einem der vorhergehenden Ansprüche,
**dadurch gekennzeichnet, dass** der eingestellte Abstand des abstandsgeregelten Fahrgeschwindigkeitsreglers (ACC) in einem Display (21) erscheint, in dem die symbolisch durch zwei konvergierende Balken (25, 26) dargestellte Straßenfläche zum vorausfahrenden Fahrzeug (24) als Anzeige in einer Art Säulendiagramm (23), möglicherweise mit farblich unterschiedlichen Abschnitten, vorgesehen ist.

19. Bedienungseinrichtung nach einem der vorhergehenden Ansprüche,
**dadurch gekennzeichnet, dass** der eingestellte Abstand des abstandsgeregelten Fahrgeschwindigkeitsreglers (ACC) in einem aufleuchtbaren Balkendiagramm (22) mit farblich unterschiedlichen Abschnitten angezeigt wird.

20. Bedienungseinrichtung nach einem der vorhergehenden Ansprüche,
**dadurch gekennzeichnet, dass** der eingestellte Abstand des abstandsgeregelten Fahrgeschwindigkeitsreglers (ACC) durch aufleuchtbare, z. B. symbolische Kettendarstellung (32) zwischen zwei Kraftfahrzeugen und möglicherweise zusätzlich durch ein aufleuchtbares Säulendiagramm (31) angezeigt wird.

21. Bedienungseinrichtung nach einem der Ansprüche 6 bis 20,
**dadurch gekennzeichnet, dass** bei aktivierter Überholhilfe (Ü) oder Auffahrhilfe (AH) im Display (21) eine Warnlampe (Ü/AH) oder ähnliches aufleuchtet.

## Claims

1. Operating device for a road-speed governor (FGR) for a motor vehicle, with an operating lever (10) which is arranged on a steering column (11) and is to be actuated in positions for setting and increasing a set-point value (SET+) and for setting and reducing a set-point value (SET-), whereby the road-speed governor (FGR) and the operating lever (10) are parts of an Adaptive Cruise Control system (ACC) and the operating lever (10) has a button (12) which is to be switched into a position for activating and resuming a distance-controlled operation (WA) and into a position for switching off the Adaptive Cruise Control system (AUS), whereby if the Adaptive Cruise Control system is activated and the button (12) is not actuated the actuation of the operating lever (10) effects the issuance of a set-point value for the road speed, whereas the simultaneous switching of the operating lever into the position for setting and increasing or into the position for setting and reducing the set-point value and of the button (12) into the position for activating and resuming an adaptive-cruise-controlled operation (WA) effects an increase or a reduction in the set-point distance, whereby if the operating lever (10) is briefly tapped into the position for setting and increasing the set-point value (SET+) or into the position for setting and reducing the set-point value (SET-) a change by one stage in each case will be effected and if the operating lever (10) is held in these positions for prolonged periods the distance set will be changed continuously.

2. Operating device according to Claim 1, **characterised in that** after the Adaptive Cruise Control governor (ACC) system has been deactivated during the journey it can be reactivated (WA) by actuation of the button (12) and the values last set for speed and distance to the vehicle travelling ahead are reset as set-point values.

3. Operating device according to Claim 1, **characterised in that** the distance is divided into "weit" (long), "mittel" (medium) and "nah" (short) and can be set to the aforementioned distances by simultaneously switching the operating lever (10) to SET+ or SET- and the button (12) for reactivation (WA).

4. Operating device according to one of the foregoing Claims 1, **characterised in that** after the engine has been switched off the Adaptive Cruise Control governor (ACC) can be activated by switching the operating lever (10) to SET+ or SET-, whereby the largest distance that can be set and the actual speed are set simultaneously.

5. Operating device according to one of the foregoing Claims, **characterised in that** the nominal speed value for the Adaptive Cruise Control governor (ACC) can be increased or lowered step by step if the SET+ or SET- function on the operating lever (10) is briefly actuated or can be increased or lowered continuously if the SET+ or SET- function on the operating lever (10) is actuated for a prolonged period.

6. Operating device according to one of the foregoing Claims, **characterised in that** an overtaking aid (Ü) is provided, by means of which the distance set via the Adaptive Cruise Control governor (ACC) can be undercut, whereby the Adaptive Cruise Control function is deactivated or set to a minimum distance.

7. Operating device according to Claim 6, **characterised in that** an overtaking-aid button (13) on the operating lever (10) is provided, by means of which the overtaking aid can be activated.

8. Operating device according to Claim 6, **characterised in that** overtaking aid (Ü) is automatically activated by actuation of the direction indicator lever.

9. Operating device according to one of the foregoing Claims, **characterised in that** when the button (12) is set for reactivating (WA) or the direction indicator lever is reset to the neutral position the overtaking aid (Ü) is deactived.

10. Operating device according to one of the foregoing Claims, **characterised in that** a driving-up aid (AH) is provided, by means of which the distance set by the Adaptive Cruise Control governor (ACC) can be undercut, whereby the Adaptive Cruise Control function is deactivated or set to a minimum distance.

11. Operating device according to Claim 10, **characterised in that** the driving-up aid (AH) is activated by actuation of the accelerator pedal.

12. Operating device according to the Claims 10 and 11, **characterised in that** the driving-up aid (AH) is activated without the current setting of the engine due to the Adaptive Cruise Control governor (ACC) being overridden with the accelerator pedal and the current driving condition of the vehicle remaining unchanged.

13. Operating device according to the Claims 10 and 11, **characterised in that** the driving-up aid (AH) is activated with the accelerator pedal by overriding the engine's actual setting specified by the Adaptive Cruise Control governor (ACC).

14. Operating device according to the Claims 10 to 13, **characterised in that** the driving-up aid (AH) remains active after the foot has been taken off the accelerator pedal and initiates a moderate deceleration of the vehicle via the control system until the distance set by the Adaptive Cruise Control governor (ACC) is reached again.

15. Operating device according to the Claims 6 to 14, **characterised in that** if the overtaking aid (Ü) or driving-up aid (AH) is activated and if the distance to the vehicle ahead is perilously short, an automatic forced deceleration will be initiated by means of a command signal from the ACC system and, consequently, the overtaking aid (Ü) or the driving-up aid (AH) will be deactivated.

16. Operating device according to the Claims 6 to 15, **characterised in that** the overtaking aid (Ü) or driving-up aid (AH) will be deactivated if the vehicle recognised by the distance-measuring system disappears from the assessment area of the distance sensor and/or another vehicle or no further vehicle is being detected.

17. Operating device according to the Claims 10 to 16, **characterised in that** the driving-up aid (AH) is deactivated by operation of the button (12) for reactivation (WA).

18. Operating device according to one of the foregoing Claims, **characterised in that** the distance set in the Adaptive Cruise Control governor (ACC) appears in a display (21) in which the road area up to the vehicle ahead is symbolically presented by two converging bars (25, 26) and indicated as a kind of bar chart (23), possibly with sections of different colour.

19. Operating device according to one of the foregoing Claims, **characterised in that** the distance set in the Adaptive Cruise Control governor (ACC) is indicated in a bar chart (22) that can be illuminated and has sections of different colour.

20. Operating device according to one of the foregoing Claims, **characterised in that** the distance set in the Adaptive Cruise Control governor (ACC) is indicated by, for example, a chain-like symbol (32) which can be illuminated and is shown between two motor vehicles and possibly also by a bar chart (31) that can be illuminated.

21. Operating device according to one of the Claims 6 to 20, **characterised in that** if the overtaking aid (Ü) or the driving-up aid (AH) is activated a warning lamp (Ü/AH) or a similar device will come on in the display (21).

## Revendications

1. Dispositif de commande d'un régulateur de vitesse de croisière (FGR) d'un véhicule à moteur, avec un commodo (10) disposé sur la colonne de direction (11) qui peut être actionné dans des positions pour définir et augmenter une valeur nominale spécifiée (SET+) et pour définir et réduire une valeur nominale spécifiée (SET-), auquel cas le régulateur de vitesse de croisière (FGR) et le commodo (10) font partie intégrante d'un régulateur de vitesse à régulation de la distance (ACC) et le commodo (10) présente une touche (12) qui peut être actionnée dans une position pour activer et reprendre un fonctionnement à régulation de la distance (WA) et une position pour désactiver le régulateur de vitesse à régulation de la distance (AUS), auquel cas, lorsque le régulateur de vitesse à régulation de la distance est activé et lorsque la touche n'est pas actionnée, l'actionnement du commodo (10) entraîne la spécification d'une valeur nominale de vitesse de croisière et, par contre, une utilisation simultanée du commodo dans la position pour définir et augmenter la valeur nominale spécifiée ou dans la position pour définir et réduire celle-ci et de la touche (12) dans la position pour activer et reprendre un fonctionnement à régulation de la distance (WA) entraîne un accroissement ou une diminution de la distance nominale, auquel cas un effleurement court du commodo (10) dans la position pour définir et augmenter la valeur nominale spécifiée (SET+) ou pour définir et réduire la valeur nominale spécifiée (SET-) entraîne une modification à chaque fois d'un niveau et le maintien prolongé du commodo (10) dans ces positions entraîne une modification progressive de la distance définie.

2. Dispositif de commande selon la revendication 1, **caractérisé par le fait que** le régulateur de vitesse à régulation de la distance (ACC) est activé, après une désactivation pendant le trajet, par l'utilisation de la touche (12) sur Reprise (WA) et que les valeurs définies en dernier pour la vitesse et la distance par rapport au véhicule qui précède sont reprises comme valeur nominale spécifiée.

3. Dispositif de commande selon la revendication 1, **caractérisé par le fait que** la distance, classée selon « loin », « moyen », « près », peut être ajustée en actionnant simultanément le commodo (10) sur SET+ ou SET- et la touche sur Reprendre (WA) selon les distances mentionnées.

4. Dispositif de commande selon une des revendications mentionnées précédemment, **caractérisé par** le fait, après que le moteur a été arrêté, le régulateur de vitesse à régulation de la distance (ACC) peut être activé par l'actionnement du commodo (10) sur SET+ ou SET-, auquel cas la distance la plus importante réglable et la vitesse actuelle sont définies simultanément.

5. Dispositif de commande selon une des revendications mentionnées précédemment, **caractérisé par le fait que** la valeur nominale de la vitesse définie par le régulateur de vitesse à régulation de la distance (ACC) est augmentée ou réduite par niveau lorsque le commodo (10) est actionné pendant un court instant sur SET+ ou SET- et progressivement lorsque le commodo est maintenu quelques instants sur SET+ ou SET-.

6. Dispositif de commande selon une des revendications mentionnées précédemment, **caractérisé par le fait qu'**une aide au dépassement (Ü) est prévue et permet de ne pas respecter la distance définie avec le régulateur de vitesse à régulation de la distance (ACC), auquel cas la régulation de la distance est désactivée ou est définie sur une distance minimale.

7. Dispositif de commande selon la revendication 6, **caractérisé par le fait qu'**un bouton d'aide au dépassement (13) est prévu sur le commodo (10) et permet d'activer l'aide au dépassement (Ü).

8. Dispositif de commande selon la revendication 6, **caractérisé par le fait que** l'aide au dépassement (Ü) est activée automatiquement lors de l'actionnement du commodo des clignotants.

9. Dispositif de commande selon une des revendications mentionnées précédemment, **caractérisé par le fait que** l'actionnement de la touche (12) sur Reprendre (WA) ou la remise du commodo des clignotants dans la position neutre entraîne la désactivation de l'aide au dépassement (Ü).

10. Dispositif de commande selon une des revendications mentionnées précédemment, **caractérisé par le fait qu'**une aide au rapprochement (AH) est prévue et permet de ne pas respecter la distance définie avec le régulateur de vitesse à régulation de la distance (ACC), auquel cas la régulation de la distance est désactivée ou est définie sur une distance minimale.

11. Dispositif de commande selon la revendication 10, **caractérisé par le fait que** l'aide au rapprochcment (AH) peut être activée par l'actionnement de la pédale d'accélérateur.

12. Dispositif de commande selon les revendications 10 et 11, **caractérisé par le fait que** l'aide au rapprochement (AH) est activée sans que le réglage du moteur par le régulateur de vitesse à régulation de la distance (ACC) soit surrégulé par le biais de la pédale d'accélérateur et, à cette occasion, l'état de conduite momentané du véhicule est modifié.

13. Dispositif de commande selon les revendications 10 et 11, **caractérisé par le fait que** l'aide au rapprochement (AH) est activée avec la pédale d'accélérateur par surrégulation du réglage momentané du moteur, spécifié par le régulateur de vitesse avec régulation de la distance (ACC).

14. Dispositif de commande selon les revendications 10 à 13, **caractérisé par le fait que** l'aide au rapprochement (AH) reste encore active après que le chauffeur a retiré le pied de la pédale d'accélérateur et entreprend une décélération modérée du véhicule par le biais du système de régulation jusqu'à ce que la distance définie par le régulateur de vitesse avec régulation de la distance (ACC) soit de nouveau atteinte.

15. Dispositif de commande selon une des revendications 6 à 14, **caractérisé par le fait que**, lorsque l'aide au dépassement (Ü) ou l'aide au rapprochement (AH) est activée, un freinage forcé automatique est amorcé suite à un signal de commande de la régulation de la distance en cas de distance de sécurité trop réduite et dangereuse par rapport au véhicule qui précède, ce qui désactive alors l'aide au dépassement (Ü) ou l'aide au rapprochement (AH).

16. Dispositif de commande selon une des revendications 6 à 15, **caractérisé par le fait que** l'aide au dépassement (Ü) ou l'aide au rapprochement (AH) est désactivée lorsque le véhicule détecté par le système de mesure de la distance disparaît de la zone de détection du capteur de distance et/ou lorsque un autre véhicule ou aucun véhicule n'est plus détecté.

17. Dispositif de commande selon une des revendications 10 à 16, **caractérisé par le fait que** l'aide au rapprochement (AH) est désactivée par l'actionnement de la touche (12) sur Reprise (WA).

18. Dispositif de commande selon une des revendications mentionnées précédemment, **caractérisé par le fait que** la distance définie par le régulateur de vitesse avec régulation de la distance (ACC) apparaît sur un écran (21) sur laquelle la portion de route représentée symboliquement par deux barres convergentes (25, 26) par rapport au véhicule qui précède (24) est prévue comme affichage sous forme de diagramme à bâtons (23), éventuellement avec des sections de couleurs différentes.

19. Dispositif de commande selon une des revendications mentionnées précédemment, **caractérisé par le fait que** la distance définie par le régulateur de vitesse avec régulation de la distance (ACC) est affichée dans un diagramme à bâtons (22) éclairable avec des sections de couleurs différentes.

20. Dispositif de commande selon une des revendications mentionnées précédemment, **caractérisé par le fait que** la distance définie par le régulateur de vitesse avec régulation de la distance (ACC) est affichée par une représentation en chaîne (32) éclairable et, par exemple symbolique, entre deux véhicules à moteur et éventuellement en supplément par un diagramme à bâtons (31) éclairable.

21. Dispositif de commande selon une des revendications 6 à 20, **caractérisé par le fait que**, lorsque l'aide au dépassement (Ü) ou l'aide au rapprochement (AH) est activée, un témoin d'avertissement (Ü/AH) ou un voyant similaire est allumé sur l'écran (21)
